# EUROPEAN PATENT APPLICATION

(11) **EP 4 796 454 A1**
(43) Date of publication of application: **26.08.2026**
(21) Application number: 24894227.8
(22) Date of filing: 22.11.2024
(51) Int. Cl.: B65D 77/04, B65D 1/00, B65D 8/04, B65D 8/06, B65D 25/20, B65D 81/38

(54) **CONTAINER AND METHOD FOR MANUFACTURING CONTAINER**

(30) Priority: 23.11.2023 CN 202311567538
(71) Applicant: Nakada, Kazushi, Shanghai (CN)
(72) Inventor: Nakada, Kazushi, Shanghai (CN)
(74) Representative: Staeger & Sperling Partnerschaftsgesellschaft mbB
(86) International application number: PCT/JP2024/041447
(87) International publication number: WO 2025/110237

(57) **Abstract**

There is provided a container that is resistant to external forces and heat, despite the use of ceramic.

A cup (1A) that is a container includes a light-transmitting outer container part (2), an inner container part (3) that is arranged inside the outer container part (2) with a gap in between and joined to the outer container part (2), and a ceramic (5) that is movably arranged in an internal space (4) formed by the gap between the outer container part (2) and the inner container part (3).

## Description

### [Technical Field]

The present invention relates to a container and a method for manufacturing a container.

### [Background]

Various types of containers using ceramics have been proposed conventionally. An example of such containers is one composed of ceramic and a glass coating that is in close contact with all of the outer surfaces of the ceramic (see Patent Literature 1).

In this conventional example of container, the ceramic inside can be seen through the glass coating. Ceramics have the advantage of being able to express unique designs that cannot be achieved with other materials, and these designs can be seen through glass coating.

### [Citation List]

### [Patent Literatures]

Patent Literature 1: Japanese Unexamined Patent Application Publication No. 2011-63465

### [Summary of the Invention]

### [Technical Problem]

However, in the above conventional example, the ceramic and the glass coating are in close contact and fixed to each other, so there is a problem that the ceramic may suffer thermal damage (breakage, discoloration, or the like) due to the difference in thermal expansion coefficient between the two materials. Furthermore, since the ceramic and the glass coating are tightly attached and fixed, there is a problem that external forces and heat from the glass coating directly act on the ceramic inside, resulting in a structure that makes the ceramic susceptible to damage from external forces and heat.

As described above, ceramics can express unique designs that cannot be achieved with other materials, so there is a strong desire to develop containers that are resistant to external forces and heat by combining ceramics with other materials. If such containers are developed, it is expected that not only the ceramics industry but also the material industries that use ceramics together with materials (for example, the glass industry) will see market invigoration and expansion.

Therefore, the present invention aims to provide a container that is resistant to external forces and heat despite the use of ceramics, and a method for manufacturing the container.

### [Solution to Problem]

The present invention has been made in view of the above problems, and is a container that includes a light-transmitting outer container part, an inner container part that is arranged inside the outer container part and joined to the outer container part, and a ceramic that is movably arranged in an internal space formed between the outer container part and the inner container part.

Another aspect of the present invention is a method for manufacturing a container, the method including: a parts production step of producing an outer container part, an inner container part, and a ceramic; a parts assembly step of assembling the outer container part and the inner container part in a temporary joined state, with the ceramic arranged in a gap between the outer container part and the inner container part; and a welding step of heating and welding a joining area between the outer container part and the inner container part to form a joint portion.

### [Advantageous Effects of Invention]

According to the present invention, the ceramic is movable within the internal space surrounded by the outer container part and the inner container part, and is not fixed to either the outer container part or the inner container part. Therefore, the ceramic is not susceptible to thermal damage caused by differences in thermal expansion coefficient between the outer container part and the inner container part. Furthermore, compared to cases where the ceramic is in close contact with the outer container part and the inner container part, the ceramic does not receive direct heat or external forces from the outer container part and the inner container part, thus suppressing damage from heat and external forces. From the above, it is possible to provide a container that is resistant to external forces and heat, despite the use of ceramic. Ceramics can express a wide variety of unique and elaborate designs that cannot be achieved with other materials, and it is possible to provide containers that allow these ceramic designs to be seen through the outer container part.

### [Brief Description of Drawings]

The drawings illustrate particular embodiments of the present invention according to the present disclosure, including not only essential features of the invention but also selective and preferred embodiments.
FIG. 1 illustrates a first embodiment, where FIG. 1(a) is a front view of a cup, and FIG. 1(b) is an enlarged view of a part Ib in FIG. 1(a).
FIG. 2 is a cross-sectional view of the cup in the first embodiment.
FIG. 3 is an exploded perspective view of the cup before joining (welding) in the first embodiment.
FIG. 4 illustrates a second embodiment, where FIG. 4(a) is a front view of a cup, and FIG. 4(b) is an enlarged view of a part IVb in FIG. 4(a).
FIG. 5 is a cross-sectional view of the cup in the second embodiment.
FIG. 6 is an exploded perspective view of the cup before joining (welding) in the second embodiment.
FIG. 7 illustrates a third embodiment, where FIG. 7(a) is a front view of a cup, and FIG. 7(b) is an enlarged view of a part VIIb in FIG. 7(a).
FIG. 8 is a cross-sectional view of the cup in the third embodiment.
FIG. 9 is an exploded perspective view of the cup before joining (welding) in the third embodiment.
FIG. 10 is a perspective view of main parts of a processing apparatus, illustrating a method for manufacturing the cup in the second embodiment.
FIG. 11 is a plan view of the main parts of the processing apparatus, showing a process of mounting the cup into the processing apparatus, and illustrating the method for manufacturing the cup in the second embodiment.
FIG. 12 illustrates the method for manufacturing the cup in the second embodiment, where FIG. 12(a) is a plan view of the main parts of the processing apparatus showing a process of welding the cup, and FIG. 12(b) is a view from a direction of XIIb arrow in FIG. 12(a).
FIG. 13 illustrates the method for manufacturing the cup in the second embodiment, where FIG. 13(a) is a front view of the main parts of the processing apparatus showing a process of welding the cup, and FIG. 13(b) is a view from a direction of XIIIb arrow in FIG. 13(a).
FIG. 14 is a schematic diagram illustrating a method for manufacturing a modification of the cup in the second embodiment, showing heating by burner flame, blocking heat of the flame by a carbon panel, and cooling action by an airflow from an air blowing means.

### [Description of Embodiment]

Hereinafter, embodiments will be described in detail with reference to the attached drawings. In the embodiments, already publicly known technologies will be omitted. The embodiments illustrate devices and methods for realizing the technical concept of the invention, and the technical concept of the present invention is not limited to the embodiments described below. The technical concept of the present invention can be modified in various ways within the scope of the matters described in the claims. In particular, it should be noted that the drawings are schematic and may differ from reality.

A container is a vessel, regardless of its contents. That is, the contents can be food products, solids, granules, fluids, or the like. In the embodiments, a cup for holding a liquid beverage will be taken as an example.

### (First Embodiment)

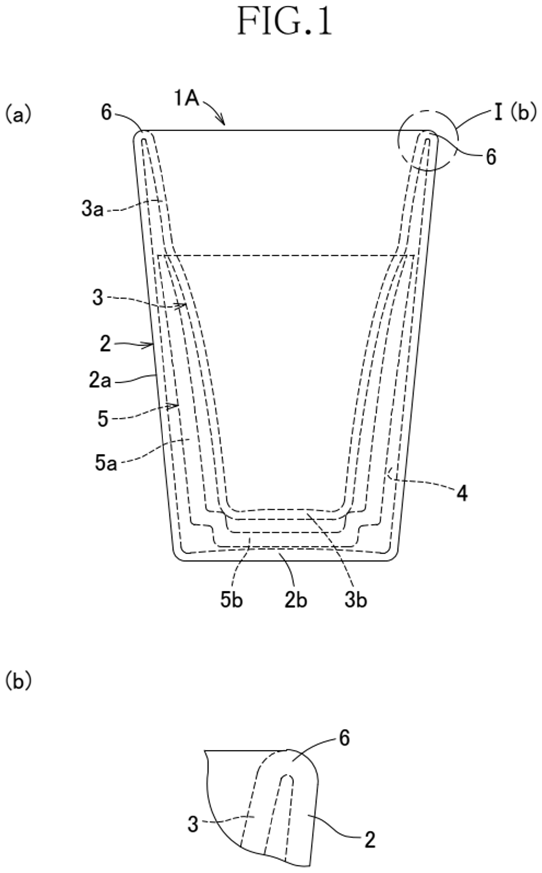

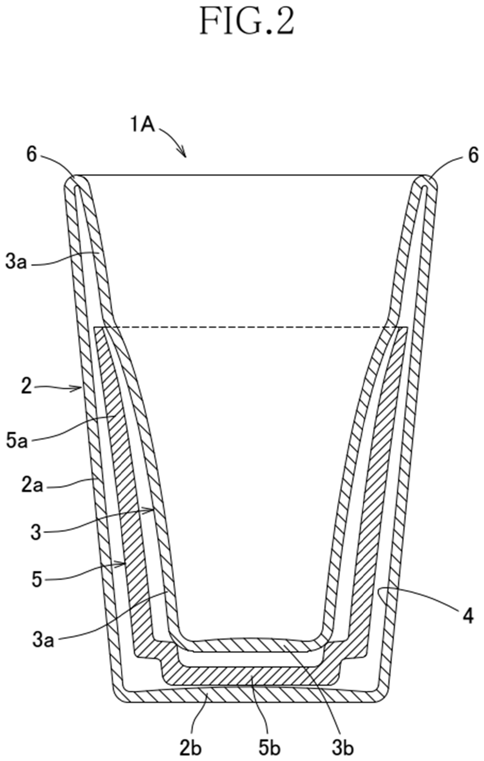

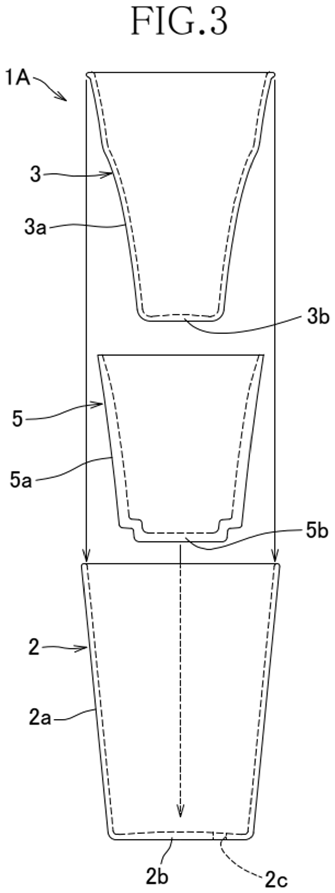

FIGS. 1 to 3 illustrate a first embodiment of the present invention. As shown in FIGS. 1 to 3, a cup 1A, which is a container, includes an outer container part 2, an inner container part 3 that is arranged inside the outer container part 2 with a gap in between and joined to the outer container part 2, and a ceramic 5 that is movably arranged in an internal space 4 formed by the gap between the outer container part 2 and the inner container part 3.

The outer container part 2 has a substantially truncated cone side portion 2a and a bottom portion 2b that closes the bottom surface of the side portion 2a, with the top surface of the side portion 2a being open.

The outer container part 2 is made of light-transmitting glass. That is, the inside is visible from the outside of the outer container part 2.

The inner container part 3 has a side portion 3a that is slightly smaller in diameter than the outer container part 2 and is substantially truncated cone in shape, and a bottom portion 3b that closes the bottom surface of the side portion 3a, with the top surface of the side portion 3a being open.

The inner container part 3, like the outer container part 2, is made of light-transmitting glass. That is, the inside can be seen from the inside of the inner container part 3.

The upper ends of the outer container part 2 and the inner container part 3 are set to the same height when they are put together. The upper ends are coupled by a joint portion 6 around their entire circumference. The joint portion 6 forms the rim. The joint portion 6 is formed by welding together the upper ends of both the outer container part 2 and the inner container part 3 by flame firing, as described below. Therefore, the surface of the joint portion 6 is formed in an arc shape by surface tension during the solidification process of the molten glass material (see FIG. 1(b)).

As described above, the outer container part 2 and the inner container part 3 are both made of glass, and more specifically, borosilicate glass.

The internal space 4 between the outer container part 2 and the inner container part 3 has a shape that is continuous between the side portions 2a, 3a and the bottom portions 2b, 3b of both.

The ceramic 5 has a truncated cone side portion 5a and a bottom portion 5b that closes the bottom surface of the side portion 5a. The ceramic 5 is arranged across the area of the internal space 4 with the side portions 2a, 3a of the outer container part 2 and the inner container part 3, and across the area of the internal space 4 with the bottom portions 2b, 3b of the inner container part 3 of the outer container part 2.

The ceramic 5 is not fixed to either the outer container part 2 or the inner container part 3, but is movably arranged in the internal space 4. In the first embodiment, the ceramic 5 is arranged to be slightly movable in the vertical direction and a little more movable in the horizontal (lateral) direction than in the vertical direction.

The outer surface of the ceramic 5 has a design, but its illustration is omitted.

The ceramic 5 is a material containing 60% or more silica and feldspar (Na, K, Ca, Ba) (Si, Al) 408.

As described above, in the first embodiment, the cup 1A includes the light-transmitting outer container part 2, the inner container part 3 that is arranged inside the outer container part 2 with a gap in between and joined to the outer container part 2, and the ceramic 5 that is movably arranged in the internal space 4 formed by the gap between the outer container part 2 and the inner container part 3.

Therefore, the ceramic 5 is movable in the internal space 4 surrounded by the outer container part 2 and the inner container part 3, and is not fixed to either the outer container part 2 or the inner container part 3, so the ceramic 5 will not suffer thermal damage due to the difference in thermal expansion coefficient between the outer container part 2 and the inner container part 3. That is, if the ceramic 5 is fixed to the outer container part 2 or the inner container part 3, the difference in thermal expansion coefficient at the fixing point could cause thermal stress or other effects on the ceramic 5, potentially leading to damage (breakage, stress, or the like). However, the ceramic 5 will not suffer such damage.

Furthermore, compared to cases where the ceramic 5 is in close contact with the outer container part 2 and the inner container part 3, the ceramic 5 does not receive direct heat or external forces from the outer container part 2 and the inner container part 3, thus suppressing damage from heat and external forces. From the above, it is possible to provide the cup 1A that is resistant to external forces and heat, despite the use of the ceramic 5.

The cup 1A has the internal space 4 between the outer container part 2 and the inner container part 3, and thus has good heat-insulating properties and excellent heat-retention properties.

In the first embodiment, the inner container part 3 is light-transmitting. Therefore, the ceramic 5 can be seen through the inner container part 3, and thus the design on the back side of the ceramic 5 can be seen.

In the first embodiment, the upper ends of the outer container part 2 and inner container part 3 are formed at the same height, and the upper ends of both the outer container part 2 and the inner container part 3 are joined by the joint portion 6. Therefore, the space for receiving the ceramic 5 is large, so there is a high degree of flexibility in the dimensions of the ceramic 5. That is, the ceramic 5 slightly lower than the outer container part 2 and the inner container part 3 can be accommodated.

In the first embodiment, the ceramic 5 is arranged to be movable both vertically and horizontally within the internal space 4. Therefore, the user can hear the sound by shaking the cup 1A vertically or horizontally. Each time the user drinks from the cup 1A, the ceramic 5 moves up and down, allowing the user to hear a sound.

In the first embodiment, the outer container part 2 and the inner container part 3 are made of glass. Therefore, the entire outer surface of the cup 1A is made of glass, so it is superior to other materials in terms of hygiene. Glass generally excels other materials in productivity and other aspects, although being inferior to plastic.

In the first embodiment, the outer container part 2 and the inner container part 3 are specifically made of borosilicate glass. Therefore, borosilicate glass has a thermal expansion coefficient of 30 × (10 to the power of 7), which is about one-third that of ordinary glass, and therefore thermal stress caused by temperature differences is reduced, so that the cup 1A is resistant to thermal damage. Borosilicate glass has a heat resistant temperature of 450°C, which is higher than ordinary glass, making the cup 1A more resistant to heat damage in this respect as well.

In the first embodiment, the ceramic material 5 is a material containing 60% or more silica and feldspar (Na, K, Ca, Ba) (Si, Al) 408. Therefore, the ceramic 5 has strong heat resistance and will not crack when heated to high temperatures.

### (Second Embodiment)

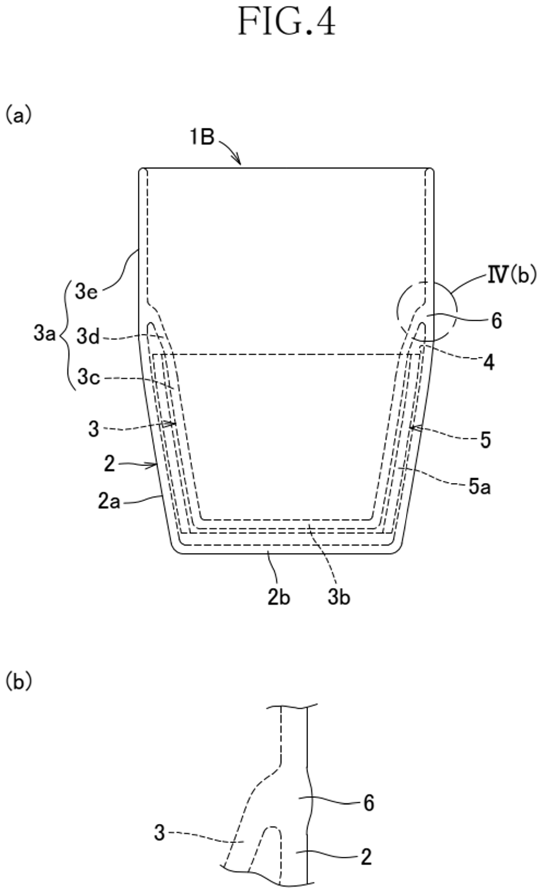

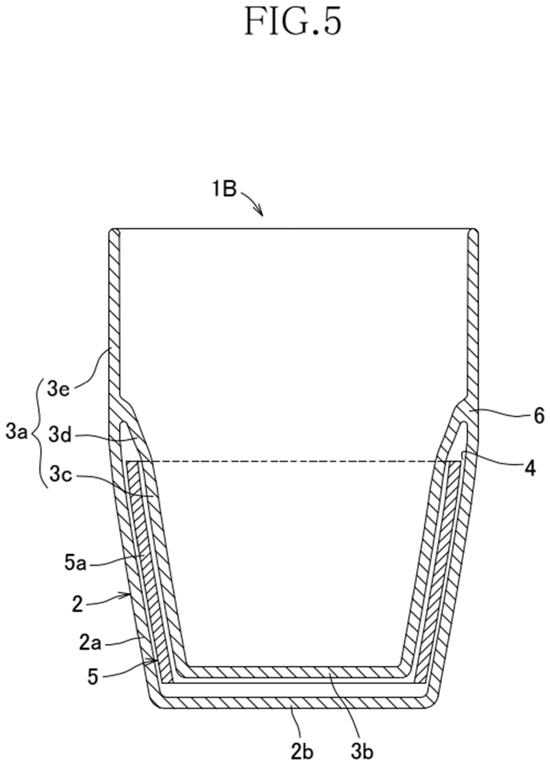

FIGS 4 to 6 illustrate a second embodiment of the present invention. As illustrated in FIGS. 4 to 6, a cup 1B, which is a container of the second embodiment, differs from the first embodiment only in the following configuration.

That is, an upper end of an outer container part 2 is set lower than an upper end of an inner container part 3 when the outer container part 2 is put together with the inner container part 3. More specifically, a side portion 3a of the inner container part 3 is constituted of a truncated cone 3c whose lower end is continuous with a bottom portion 3b, an enlarged truncated cone 3d that is continuous with an upper end of the truncated cone 3c and has a large inclination angle, and a cylindrical portion 3e that is coupled from an upper end of the enlarged truncated cone 3d.

The outer container part 2, when being put together with the inner container part 3, is set at the same height as the upper end position of the enlarged truncated cone 3d of the inner container part 3. The outer container part 2 is joined to the inner container part 3 by a joint portion 6 at its upper end. Specifically, the joint portion 6 is formed by welding the upper end portion of the outer container part 2 to the corresponding upper end portion of the enlarged truncated cone 3d of the inner container part 3. Therefore, the joint portion 6 is formed in an arc shape by surface tension during the solidification process of the molten glass material (see FIG. 4(b)). In the second embodiment, the upper end of the inner container part 3, that is, the upper end of the cylindrical portion 3e, forms the rim.

A ceramic 5 has only a truncated cone-shaped side portion 5a and have no bottom portion unlike in the first embodiment. Therefore, the ceramic 5 is arranged in an internal space 4 of side portions 2a, 3a of both the outer container part 2 and the inner container part 3.

In the second embodiment, the ceramic 5 is arranged to be highly movable in the vertical direction and slightly movable in the horizontal (lateral) direction.

Other components are the same as those in the first embodiment, and descriptions thereof will be omitted to avoid redundant descriptions. In FIGS. 4 to 6, the same reference signs are used for components identical to those in the first embodiment for clarification.

As described above, the second embodiment also has substantially the same advantageous effects as the first embodiment. That is, the ceramic 5 is not fixed to either the outer container part 2 or the inner container part 3, so the ceramic 5 will not suffer thermal damage due to the difference in thermal expansion coefficient between the outer container part 2 and the inner container part 3. Furthermore, compared to cases where the ceramic 5 is in close contact with the outer container part 2 and the inner container part 3, the ceramic 5 does not receive direct heat or external forces from the outer container part 2 and the inner container part 3, thus suppressing damage from heat and external forces. From the above, the second embodiment has the advantageous effect of providing the cup 1B that is resistant to external forces and heat, despite the use of the ceramic 5.

In the second embodiment, the upper end of the outer container part 2 is set lower than the upper end of the inner container part 3, and the upper end of the outer container part 2 is joined to the inner container part 3 by the joint portion 6. Therefore, above the outer container part 2 is a single-layer structure of the inner container part 3 (specifically, a structure constituted only of the cylindrical portion 3e), so that it is possible to achieve weight reduction and material cost reduction compared to the case where a two-layer structure of the outer container part 2 and the inner container part 3 is present up to the upper end (in the case of the first embodiment).

### (Third Embodiment)

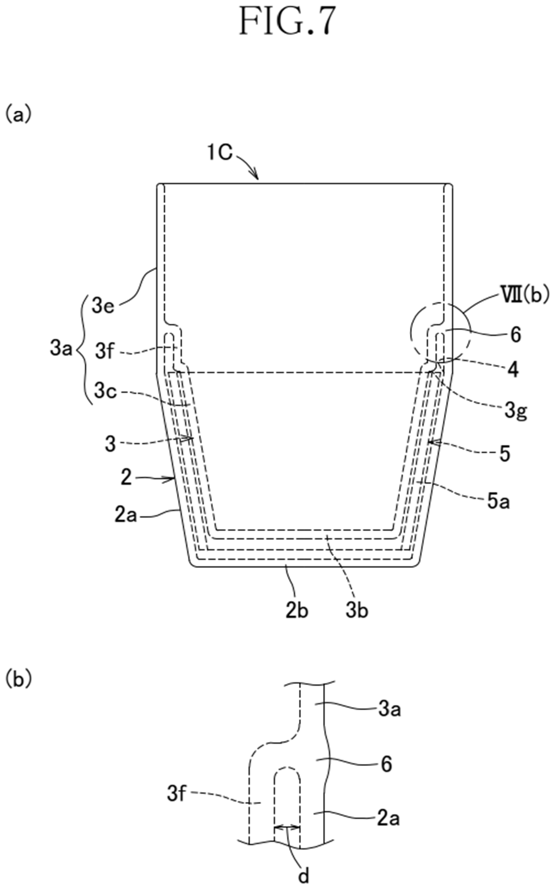

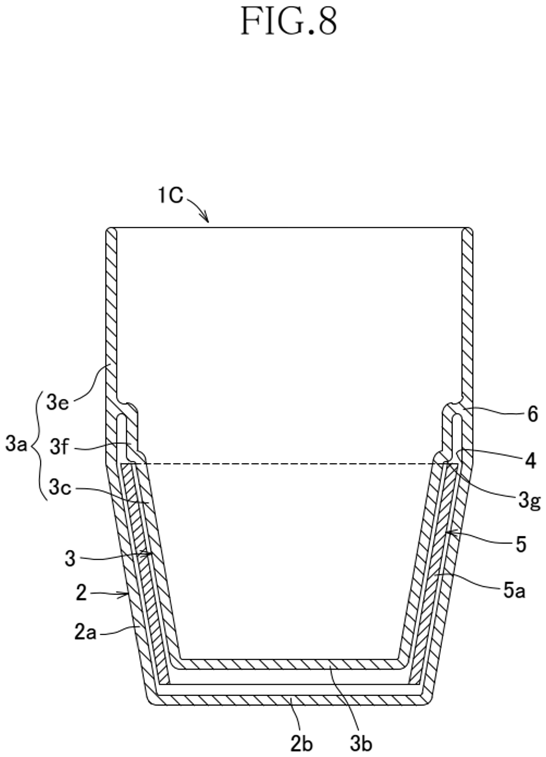

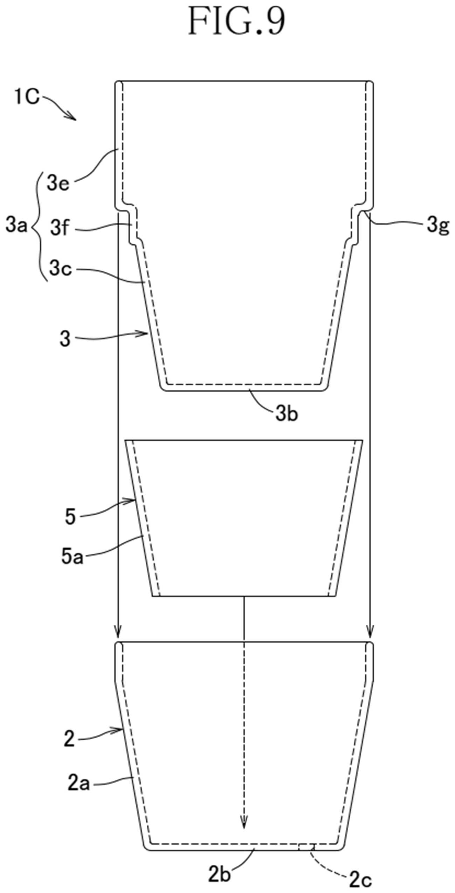

FIGS. 7 to 9 illustrate a third embodiment of the present invention. As illustrated in FIGS. 7 to 9, a cup 1C, which is a container of the third embodiment, differs from the second embodiment only in the following configuration.

That is, a side portion 3a of an inner container part 3 is constituted of a truncated cone 3c whose lower end is continuous with a bottom portion 3b, a stepped cylindrical portion 3f that is continuous with an upper end of the truncated cone 3c, and a cylindrical portion 3e that is coupled to an upper end of the stepped cylindrical portion 3f. The stepped cylindrical portion 3f has a lower end surface 3g that protrudes outward beyond the upper end of the truncated cone 3c, and a gap d (illustrated in FIG. 7(b)) between the outer surface of the stepped cylindrical portion 3f and the inner surface of the side portion 2a of the outer container part 2 is set to a small size that prevents a ceramic 5 from fitting inside. Accordingly, the ceramic 5 is set to be movable only slightly in the vertical direction compared to that in the second embodiment.

Other components are the same as those in the second embodiment, and descriptions thereof will be omitted to avoid redundant descriptions. In FIGS. 7 to 9, the same reference signs are used for components identical to those in the second embodiment for clarification.

As described above, the third embodiment also has substantially the same advantageous effects as the first embodiment. That is, the ceramic 5 is not fixed to either the outer container part 2 or the inner container part 3, so the ceramic 5 will not suffer thermal damage due to the difference in thermal expansion coefficient between the outer container part 2 and the inner container part 3. Furthermore, compared to cases where the ceramic 5 is in close contact with the outer container part 2 and the inner container part 3, the ceramic 5 does not receive direct heat or external forces from the outer container part 2 and the inner container part 3, thus suppressing damage from heat and external forces. From the above, the third embodiment has the advantageous effect of providing the cup 1C that is resistant to external forces and heat, despite the use of the ceramic 5.

In the third embodiment, similarly to the second embodiment, the upper end of the outer container part 2 is set lower than the upper end of the inner container part 3, and the upper end of the outer container part 2 is joined to the inner container part 3 by a joint portion 6. Therefore, above the outer container part 2 is a single-layer structure of the inner container part 3 (specifically, a structure constituted only of the cylindrical portion 3e), so that it is possible to achieve weight reduction and material cost reduction compared to the case where a two-layer structure of the outer container part 2 and the inner container part 3 is present up to the upper end (in the case of the first embodiment).

### (Method for Manufacturing Cup)

Next, a method for manufacturing the cup 1B in the second embodiment will be described as an example.

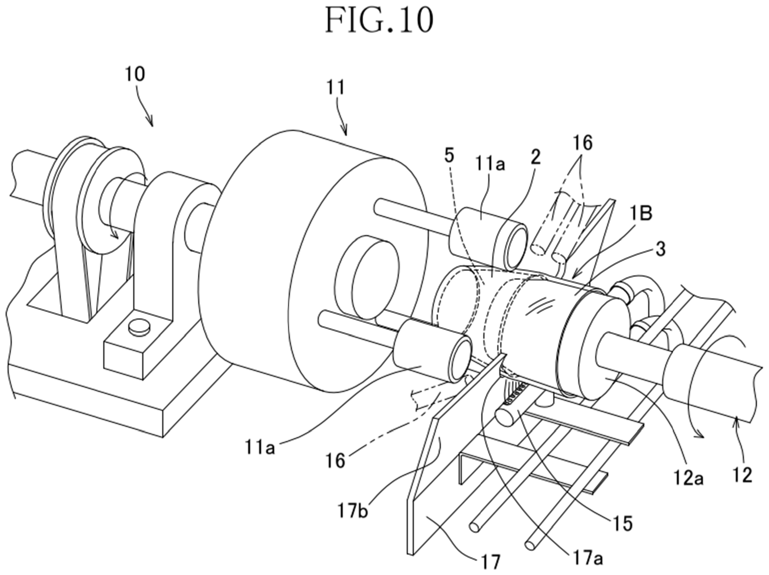

A processing apparatus 10 illustrated in FIG. 10 is used to manufacture the cup 1B. The processing apparatus 10 has a first holding part 11 and a second holding part 12 that are arranged facing each other, and the first holding part 11 and the second holding part 12 are provided to be movable in the direction of proximity and the direction of separation. The first holding part 11 has gripping portions 11a protruding at three locations in the circumferential direction around the rotation center, and these three gripping portions 11a grip the outer container part 2. The second holding part 12 has a truncated cone-shaped insertion jig 12a, and holds the inner container part 3 by fitting the insertion jig 12a into the internal space of the inner container part 3. The three gripping portions 11a of the first holding part 11 and the insertion jig 12a of the second holding part 12 are arranged to be rotatable at the same speed around the same rotation axis.

The processing apparatus 10 is provided with a burner 15, which is a heating means, and a carbon panel 17, which is a heat shielding member. The burner 15 emits a flame towards the cup 1B attached to the processing apparatus 10. The burner 15 preferably has a narrow flame radiation range and can precisely emit a flame to the joining (welding) area.

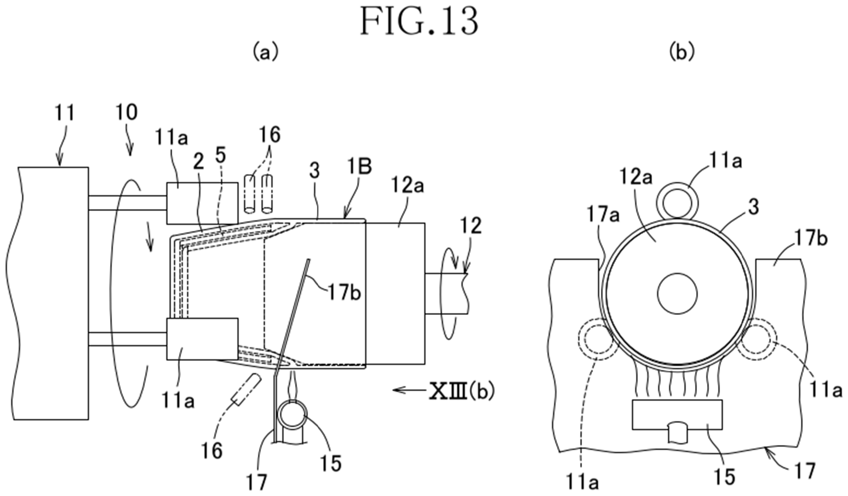

The carbon panel 17 is arranged near the burner 15. The carbon panel 17 has an arc-shaped recess 17a. The recess 17a is formed to fit around the outer circumference of the outer container part 2 near the joining (welding) area almost without a gap (see FIG. 13(b)). The carbon panel 17 has a front end-inclined portion 17b that is inclined toward the upper end of the inner container part 3 (see FIG. 13(a)).

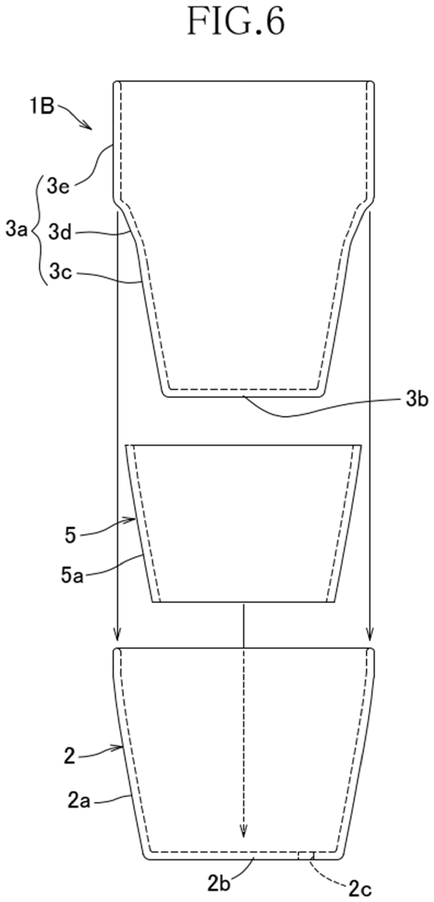

Next, a process for manufacturing the cup 1B will be described. The process for manufacturing the cup 1B mainly consists of a parts production step, a parts assembly step, and a welding step. In the parts production step, the outer container part 2, the inner container part 3, and the ceramic 5 are each produced individually. The outer container part 2 and the inner container part 3 are produced by a glassblowing method, for example. The outer container part 2 is produced to have a ventilation hole 2c (shown in FIG. 6) in the bottom portion 2b. The ceramic 5 is produced by mixing clay with powder of a predetermined material such as feldspar, then molding and firing them, for example.

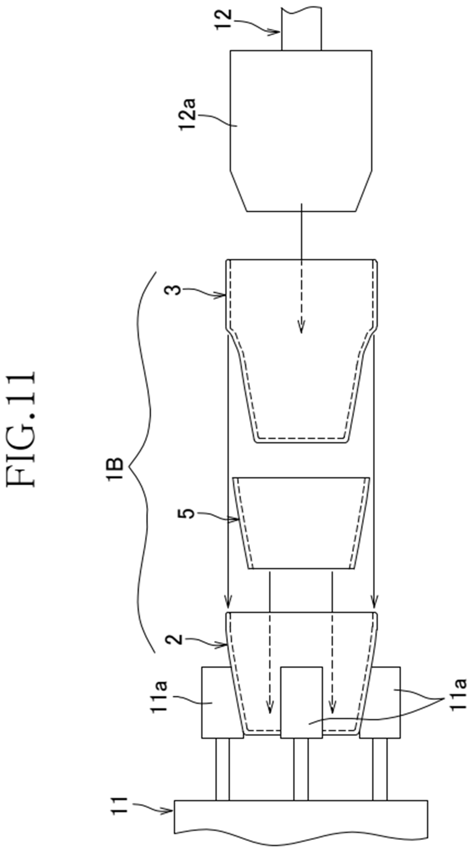

In the parts assembly step, as shown in FIG. 11, the outer container part 2 is rotatably attached to the three gripping portions 11a of the first holding part 11, and the inner container part 3 is rotatably attached to the insertion jig 12a of the second holding part 12. Then, the ceramic 5 is temporarily placed inside of the outer container part 2 or outside of the inner container part 3, and the distance between the first holding part 11 and the second holding part 12 is narrowed such that the ceramic 5 is sandwiched between the outer container part 2 and the inner container part 3, and then the outer container part 2 and the inner container part 3 are assembled in a temporarily joined state (see FIGS. 10 and 11).

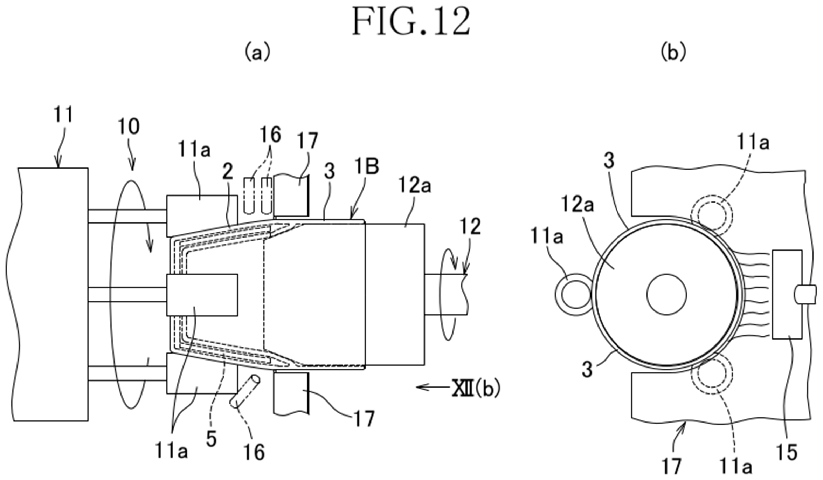

In the welding step, as shown in FIGS. 12 and 13, the joining area between the outer container part 2 and the inner container part 3 is heated with the burner 15 to weld them together while the outer container part 2 and the inner container part 3 are rotated together by the rotation of the three gripping portions 11a of the first holding part 11 and the insertion jig 12a of the second holding part 12. In the second embodiment, the joining (welding) area of the outer container part 2 and the inner container part 3 is present at the upper end of the outer container part 2 and the corresponding portion of the inner container part 3, and the entire circumference of this point is heated. Accordingly, the glass material at the upper end of the outer container part 2 and the corresponding portion of the inner container part 3 melts and mixes together. Then, as the temperature drops after heating, the joining area solidifies to form the joint portion 6.

During the solidification process as the temperature of the glass material decreases, the surface of the joint portion 6 is formed in an arc shape that protrudes outward due to the surface tension of the glass material (see FIG. 4(b)). In addition, the joint portion 6 and the surrounding surface continuous with the joint portion 6 are connected by a smooth curve without any irregularities.

After forming the joint portion 6 in this manner, the manufacturing process is completed by filling the ventilation hole (2c) of the outer container part 2 through the melting and solidification of the glass material.

Next, the above-mentioned heating of the joining area by the burner 15 will be described in more detail. The carbon panel 17 is arranged between the flame of the burner 15 and the ceramic 5 on the outer circumference of the outer container part 2. The carbon panel 17 prevents the flame of the burner 15 from scattering towards the ceramic 5, that is, prevents flame entanglement. Since the carbon panel 17 has the front end-inclined portion 17b, the flame emitted from the burner 15 changes direction after hitting the joining area, so as to move away from the ceramic 5. This also helps to suppress damage to the ceramic 5 caused by heating.

The carbon panel 17 prevents the ceramic 5 from rapidly increasing in temperature with heat shielding against flames, thus preventing the ceramic 5 from suffering thermal damage (such as breakage, discoloration, or deformation).

As a preheating step before heating with the burner 15, the ceramic 5 is gradually heated for 3 minutes to about 590°C. Performing a preheating step makes it possible to prevent rapid temperature changes in the welding step, thus preventing heat damage in the welding step.

The welding step and subsequent temperature control will be described. The upper edge area of the rotating outer container part 2 and the corresponding joining area of the inner container part 3 are heated to 1000°C to 1200°C for 3 to 6 minutes, then rapidly cooled to 590°C, and then slowly cooled to room temperature over 90 to 120 minutes. By performing this temperature control, it is possible to prevent rapid temperature changes after the welding step, thus preventing heat damage in the welding step.

As described above, the method for manufacturing the cup 1B includes: the parts production step of producing the outer container part 2, the inner container part 3, and the ceramic 5; the parts assembly step of assembling the outer container part 2 and the inner container part 3 in a temporary joined state, with the ceramic 5 arranged in a gap between the outer container part 2 and the inner container part 3; and the welding step of heating and welding the joining area between the outer container part 2 and the inner container part 3 to form the joint portion 6.

More specifically, the method for manufacturing the cup 1B includes: a parts production step of producing the outer container part 2, the inner container part 3, and the ceramic 5; a parts assembly step of rotatably attaching the outer container part 2 to the first holding part 11, rotatably attaching the inner container part 3 to the second holding part 12 that is arranged opposite the first holding part 11, temporarily arranging the ceramic 5 inside of the outer container part 2 or outside of the inner container part 3, narrowing the distance between the first holding part 11 and the second holding part 12, and assembling the outer container part 2 and the inner container part 3 in a temporarily joined state, with the ceramic 5 arranged between the outer container part 2 and the inner container part 3; and a welding step of heating and welding the joining area between the outer container part 2 and the inner container part 3 to form the joint portion 6, while rotating together the outer container part 11 and the inner container part 12 by rotation of the first holding part 11 and the second holding part 12.

The cup 1B manufactured in this manner has advantageous effects as follows. The ceramic 5 is not susceptible to thermal damage caused by the difference in thermal expansion coefficient between the outer container part 2 and the inner container part 3. In addition, the ceramic 5 does not receive direct heat or external forces from the outer container part 2 and the inner container part 3, thus suppressing damage from heat and external forces. From the above, it is possible to produce the cup 1B that is resistant to external forces and heat, despite the use of the ceramic 5. The cup 1B has the internal space 4 between the outer container part 2 and the inner container part 3, and thus has good heat-insulating properties and excellent heat-retention properties.

In the parts production step, the outer container part 2 and the inner container part 3 are produced by a glassblowing method, for example. According to the glassblowing method, it is possible to produce the outer container part 2 and the inner container part 3 with a precise outer diameter dimension, but it is difficult to produce the outer container part 2 and the inner container part 3 with a precise wall thickness. That is, the outer container part 2 cannot be produced with a precise inner diameter. However, in the cup 1B of the second embodiment, the movable ceramic 5 is arranged in the internal space 4, which makes it possible to design the cup to secure a large tolerance for the dimensions of the internal space 4 in advance (the same applies to the cup 1A of the first embodiment). Such designing enables manufacturing to be easier. Rather, it is possible to offer products where the sound generated by the movement of the ceramic 5 varies according to product.

Since the methods for manufacturing the cups 1A and 1C in the first and third embodiments are substantially the same as those in the second embodiment described above, redundant description will be avoided and only the differences will be described. That is, in the cup 1A of the first embodiment, the joining (welding) area is the upper end areas of both the outer container part 2 and the inner container part 3, and these upper end areas are heated around their entire circumference. Accordingly, the glass material at the upper end of the outer container part 2 and the upper end of the inner container part 3 melts and mixes together. Then, as the temperature drops after heating, the joining area solidifies to form the joint portion 6.

At the solidification of the glass material, the surface shape of the joint portion 6 is formed into an arc shape that protrudes outward due to the surface tension of the glass material (see FIG. 1(b)). In addition, the joint portion 6 and the surrounding surface continuous with the joint portion 6 are connected by a smooth curve without any irregularities. In the first embodiment, the cup 1A has the joint portion 6 that serves as the rim, so that the rim is formed in a shape that is comfortable against the lips. Therefore, no additional processing is required to form the rim.

The manufacturing of the cup 1C in the third embodiment is the same as that of the cup 1B in the second embodiment.

### (Modifications of Manufacturing Method)

As illustrated by dashed lines in FIGS. 10 to 13, the processing apparatus 10 may be provided with an air blowing means 16. The air blowing means 16 is arranged closer to the first holding part 11 than the joining (welding) area between the outer container part 2 and the inner container part 3. That is, the air blowing means 16 blows air toward the outer peripheral surface of the outer container part 2 in which the ceramic 5 is housed. The air blowing means 16 is arranged in two or more locations.

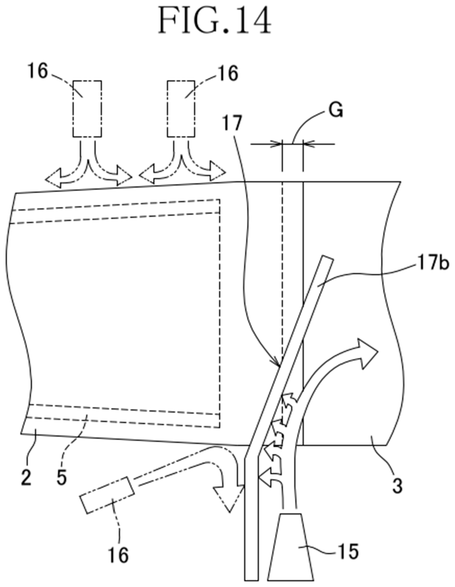

In heating the joining area (the region indicated by G in FIG. 14) with the burner 17, the air blowing means 16 blows air (cooling air) to the outer circumference of the outer container part 2 on the ceramic 5 side. This airflow suppresses the temperature rise of the ceramic 5 in the outer container part 2. Furthermore, the airflow from the air blowing means 16 is blocked by the carbon panel 17 and does not reach the joining area where the flame of the burner 15 hits. Accordingly, the joining area to which the flame of the burner 15 hits is not affected by the airflow or does not drop in temperature, and is reliably heated to the predetermined temperature by the burner 15.

In other words, the heat shielding from the flames by the carbon panel 17 and the airflow provided by the air blowing means 16 prevent rapid increase in the temperature of the ceramic 5, thus more reliably preventing the ceramic 5 from suffering thermal damage (such as breakage, discoloration, or deformation).

### (Modifications of First to Third Embodiments)

In the first to third embodiments, one ceramic 5 is arranged in the internal space 4, but a plurality of ceramics 5 may be arranged. The ceramic 5 can be porcelain or pottery, both of which are applicable in the present invention.

In the first to third embodiments, the internal space 4 is a single space, but a plurality of internal spaces 4 may be provided.

In the first to third embodiments, both the outer container part 2 and the inner container part 3 are light-transmitting, but the inner container part 3 may be configured so as not to pass light.

In the first to third embodiments, the joint portion 6 between the outer container part 2 and the inner container part 3 is formed by welding, but it may be formed by adhesive bonding or mechanical joining. However, welding is preferable because other methods may cause deterioration over time, corrosion, peeling, damage, and the like.

In the first to third embodiments, the outer container part 2 and the inner container part 3 are made of glass, but they may be made of materials other than glass.

In the first to third embodiments, the outer container part 2 and the inner container part 3 are made of borosilicate glass, but they may be made of glass other than borosilicate glass. For example, they may be made of quartz glass. Quartz glass has a similar coefficient of thermal expansion and heat resistance temperature to those of borosilicate glass, so that a container made of quartz glass is similarly resistant to heat damage.

In the first to third embodiments, the ceramic 5 may be a material containing sintered alumina. By including sintered alumina, the melting point of the ceramic 5 is increased, resulting in the cups 1A to 1C with excellent heat resistance. The ceramic 5 also includes ordinary pottery that is more brittle than porcelain or clay containing alumina.

In the first to third embodiments, the containers are the cup 1A to 1C, but the present invention can also be applied to containers other than cups.

Although each embodiment has been described in detail above, the present invention is not limited to any particular embodiment, and various modifications and alterations are possible within the scope described in the claims. Furthermore, it is possible to combine all or some of the components of the embodiments described above.

The present invention described above includes at least the following embodiments. The embodiments can be adopted separately or in combination with each other.
(1) The inner container part is a light-transmitting container.
(2) The upper end of the outer container part and the upper end of the inner container part are formed at the same height, and the upper ends of both the outer container part and the inner container part are joined by the joint portion.
(3) The upper end of the outer container part is formed lower than the upper end of the inner container part, and the upper end of the outer container part is joined to the outer container part by the joint portion.
(4) The outer container part and the inner container part are glass containers.
(5) The outer container part and the inner container part are containers made of borosilicate glass or quartz glass.
(6) The ceramic is a porcelain or pottery container.
(7) The ceramic is a container made of a material containing 60% or more silica and feldspar (Na, K, Ca, Ba) (Si, Al) 408
(8) The method for manufacturing a container includes the parts assembly step that is performed by mounting on a processing apparatus, and the welding step that is performed by heating with a burner as a heating means.
(9) In the method for manufacturing a container, the heat-shielding member prevents the flame of the burner from scattering onto the outer container part on the ceramic side.
(10) In the method for manufacturing a container, air is blown into the outer container part on the ceramic side by the air blowing means.
(11) The method for manufacturing a container includes, as a step before heating with the burner, the preheating step of gradually heating the ceramic for 3 minutes to about 590°C.
(12) In the method for manufacturing a container, the welding step includes heating the joining area between the inner container part and the outer container part to 1000°C to 1200°C for 3 to 6 minutes, then rapidly cooling to 590°C, and then cooling to room temperature over a period of 90 to 120 minutes.

### [Reference Signs List]

1A, 1B, 1C Cup (container)
2 Outer container part
3 Inner container part
4 Internal space
5 Ceramic
6 Joint portion
10 Processing apparatus
15 Burner (heating means)
17 Carbon panel (heat-shielding member)

## Claims

1. A container comprising:
a light-transmitting outer container part;
an inner container part that is arranged inside the outer container part and joined to the outer container part; and
a ceramic that is movably arranged in an internal space formed between the outer container part and the inner container part.

2. The container according to claim 1, wherein the inner container part is light-transmitting.

3. The container according to claim 1, wherein an upper end of the outer container part and an upper end of the inner container part are formed at the same height, and the upper ends of both the outer container part and the inner container part are joined by a joint portion.

4. The container according to claim 1, wherein an upper end of the outer container part is formed lower than an upper end of the inner container part, and the upper end of the outer container part is joined to the outer container part by a joint portion.

5. The container according to claim 2, wherein the outer container part and the inner container part are made of glass.

6. The container according to claim 2, wherein the outer container part and the inner container part are made of borosilicate glass or quartz glass.

7. The container according to claim 1, wherein the ceramic is porcelain or pottery.

8. The container according to claim 1, wherein the ceramic is made of a material containing 60% or more silica and feldspar (Na, K, Ca, Ba) (Si, Al) 408

9. A method for manufacturing a container, the method comprising:
a parts production step of producing an outer container part, an inner container part, and a ceramic;
a parts assembly step of assembling the outer container part and the inner container part in a temporary joined state, with the ceramic arranged in a gap between the outer container part and the inner container part; and
a welding step of heating and welding a joining area between the outer container part and the inner container part to form a joint portion.

10. The method for manufacturing a container according to claim 9, wherein the parts assembly step uses a processing apparatus capable of attaching the outer container part, the inner container part, and the ceramic, and the welding step uses a burner as a heating means.

11. The method for manufacturing a container according to claim 10, wherein a heat-shielding member prevents flame of the burner from scattering onto the outer container part on the ceramic side.

12. The method for manufacturing a container according to claim 10, wherein air is blown into the outer container part on the ceramic side by an air blowing means.

13. The method for manufacturing a container according to claim 10, wherein the method comprises, as a step before heating with the burner, a preheating step of gradually heating the ceramic for 3 minutes to about 590°C.

14. The method for manufacturing a container according to claim 9, wherein the welding step includes heating the joining area between the inner container part and the outer container part to 1000°C to 1200°C for 3 to 6 minutes, then rapidly cooling to 590°C, and then cooling to room temperature over a period of 90 to 120 minutes.
